# EUROPÄISCHE PATENTSCHRIFT

(11) **EP 2 899 535 B1**
(45) Veröffentlichungstag und Bekanntmachung des Hinweises auf die Patenterteilung: **07.08.2019**
(21) Anmeldenummer: 14196482.5
(22) Anmeldetag: 05.12.2014
(51) Int. Cl.: B07C 5/342, G01N 21/90, B07C 5/12, G01N 21/88

(54) **Vorrichtung zur optischen Inspektion von Verpackungsgegenständen in der Getränketechnologie**
Device for the optical inspection of packaging objects in beverage technology
Dispositif d'inspection optique d'objets d'emballage dans une technologie de boissons

(30) Priorität: 22.01.2014 DE 102014100699
(43) Veröffentlichungstag der Anmeldung: 29.07.2015
(73) Patentinhaber: Krones AG, 93073 Neutraubling (DE)
(72) Erfinder: Napravnik, Christian, 93073 Neutraubling (DE)
(74) Vertreter: Grünecker Patent- und Rechtsanwälte PartG mbB

(56) Entgegenhaltungen:
- EP-A1- 2 636 458
- EP-A2- 1 645 866
- EP-A2- 2 236 220
- EP-A2- 2 251 678
- EP-A2- 2 468 508
- WO-A1-02/42785
- WO-A1-97/27360
- DE-A1-102005 051 888
- DE-A1-102007 036 621
- DE-A1-102012 104 223
- DE-T2- 60 028 731
- JP-A- 2002 214 136
- US-A- 5 241 171
- US-A- 5 794 788
- US-A- 5 894 939
- US-A- 5 898 169
- US-A1- 2002 005 892
- US-A1- 2003 174 263
- US-A1- 2007 292 117
- US-A1- 2010 230 327
- US-A1- 2010 290 032
- US-B2- 8 482 743

## Beschreibung

Die Erfindung betrifft eine Vorrichtung zur optischen Inspektion von Verpackungsgegenständen in der Getränketechnologie mit den Merkmalen des Oberbegriffs von Anspruch 1.

Derartige Vorrichtungen werden üblicherweise in Behälterherstellungs- und/oder Getränkeverarbeitungsanlagen eingesetzt, um Verpackungsgegenstände wie Behälter, Gefäßverschlüsse (Deckel), Getränkekästen und/oder Gebinde optisch zu inspizieren. Beispielsweise wird mit einer derartigen Vorrichtung die Anordnung von mehreren Behältern in einem Gebinde inspiziert, wobei die Kamera von oben auf die Behälter in Richtung des Förderbands ausgerichtet ist. Folglich bildet ein Teil des Förderbandes einen Hintergrundabschnitt für die Kamera, der dann im aufgenommenen Bild als Bildhintergrund erscheint. Die Kamerabilder werden anschließend in einer Bildverarbeitungseinheit ausgewertet, wobei beispielsweise die Behälterumrisse detektiert und analysiert werden.

Damit die Verpackungsgegenstände gegenüber dem Hintergrundabschnitt besonders sicher erkannt werden können, wird die Oberfläche des Förderbands abhängig von den optischen Eigenschaften der Verpackungsgegenstände besonderes kontrastreich ausgewählt. Dies geschieht üblicherweise bereits bei der Anlagenplanung oder bei der Installation. Optische Eigenschaft kann hier bedeuten, dass dies die Farbe, der Transmissions- und/oder Reflexionsgrad des Verpackungsgegenstands und/oder des darin abgefüllten Produkts ist. Beispielsweise wird bei einem transparenten Behälter mit einem dunklen Inhalt ein Förderband aus einem möglichst hellen Material oder mit einer hellen Beschichtung eingesetzt. Demgegenüber wird bei einer Füllung eines transparenten Behälters mit Wasser ein Förderband mit einem möglichst dunklen Material oder einer dunklen Beschichtung eingesetzt. Will man nun auf der Vorrichtung Behälter mit unterschiedlichen optischen Eigenschaften inspizieren, so muss für das Förderband ein entsprechender Kompromiss gefunden werden.

Nachteilig bei derartigen Vorrichtungen ist, dass es gelegentlich durch die unterschiedlichen optischen Eigenschaften der Verpackungsgegenstände zu einem Fehler bei der Inspektion kommen kann.

Die EP 1645866 A2 offenbart eine Vorrichtung und ein Verfahren zur Erkennung von Gebinden oder Behältern in Gebinden, wobei mehrere Beleuchtungsarten eingesetzt werden, um eine umfassendere und genauere Aussage über den Zustand und Inhalt eines Kastens zu machen.

Aus der US 2007/0292117 A1 ist ein Automat bekannt, bei der eine retroreflektierende Beschichtung eingesetzt wird, um eine Objektkontur zu erkennen.

Aus der JP 2002-214136 A ist ein Verfahren und eine Vorrichtung bekannt, mit denen Abfallmaterial sowohl mit einer Lichtquelle durchleuchtet als auch mit einer weiteren Lichtquelle beleuchtet und von einem Empfänger erfasst werden.

Die US 5,898,169 offenbart eine Vorrichtung, um das Konturbild eines Flüssigkeitsbehälters zu erfassen und zu erkennen.

Die EP 2 251 678 A2 offenbart eine Inspektionsvorrichtung zur Erkennung von Embossings und/oder Etiketten auf transparenten Gefäßen, bei der das Gefäß mittels einer Durchlichtleuchte mit einem Streifenmuster durchleuchtet wird.

Die US2010/0230327 A und die US-2010/0290032 A offenbaren Inspektionsvorrichtungen, bei denen retro-reflektierende Reflektionskörper verwendet werden.

Aufgabe der vorliegenden Erfindung ist es daher, eine Vorrichtung zur Inspektion von Verpackungsgegenständen in der Getränketechnologie bereitzustellen, mit der die Inspektion von Verpackungsgegenständen mit unterschiedlichen optischen Eigenschaften zuverlässiger erfolgen kann.

Diese Aufgabe wird bei einer Vorrichtung zur optischen Inspektion von Verpackungsgegenständen in der Getränketechnologie mit den Merkmalen des Oberbegriffs von Anspruch 1 mit den Merkmalen des kennzeichnenden Teils gelöst, gemäß dem das Förderband zur Intensitäts- und/oder Farbveränderung des Hintergrundabschnitts einen photochromen, piezochromen, elektrochromen oder thermochromen Farbstoff aufweist.

Dadurch, dass das Förderband einen Farbstoff zur Intensitäts- und/oder Farbveränderung aufweist, kann der Farbstoff durch eine Aktivierungsenergie angeregt werden und so ein Intensitäts- und/oder Farbwechsel des Förderbands bewirkt werden. Beispielsweise kann ein photochromer Farbstoff dadurch zum Leuchten angeregt werden. Zusätzlich kann Licht durch retroreflektierende Reflektionskörper besonderes effizient in Richtung der Kamera reflektiert und/oder verstärkt werden. Dadurch kann der Hintergrundabschnitt ohne manuellen Eingriff in die Vorrichtung auf die optischen Eigenschaften des Verpackungsgegenstands abgestimmt werden, so dass im Kamerabild ein möglichst hoher Kontrast zwischen den Verpackungsgegenständen und dem Hintergrundabschnitt erreicht wird. Folglich werden die Verpackungsgegenstände im Kamerabild durch die Bildverarbeitung besonders gut erkannt. Dadurch ist bei einer derartigen Vorrichtung die Inspektion unabhängig von den optischen Eigenschaften der Verpackungsgegenstand besonderes zuverlässig.

Die Vorrichtung zur optischen Inspektion von Verpackungsgegenständen kann in einer Behälterherstellungs- und/oder Getränkeverarbeitungsanlage angeordnet sein. Die Vorrichtung kann einer Abfüllanlage zum Abfüllen eines Produkts in die Behälter nachgeordnet sein. Die Vorrichtung kann auch einer Streckblasmaschine für PET-Flaschen nachgeordnet sein.

Die Verpackungsgegenstände können Behälter, Gefäßverschlüsse, Getränkekästen und/oder Gebinde sein. Der Verpackungsgegenstand kann jede Anordnung von Behältern umfassen, die optional miteinander gebunden, gestapelt oder zusammengefasst sind. Der Verpackungsgegenstand kann Behälter und ein Gebinde umfassen, wobei optional die Behälter in dem Gebinde mittels geschrumpfter Kunststofffolie, einem Band, einem Getränkekasten, Klebstoff und/oder sonst irgendwie zusammengehalten werden. Das Gebinde kann einen Kasten, eine die Behälter umschließende Folie, einen Riemen und/oder einen Tragriemen umfassen.

Die Behälter können dazu vorgesehen sein, Getränke, Hygieneartikel, Pasten, chemische, biologische und/oder pharmazeutische Produkte aufzunehmen. Die Behälter können Kunststoffflaschen, Glasflaschen, Dosen und/oder Tuben sein. Bei Kunststoffbehältern kann es sich im Speziellen um PET-, HD-PE- oder PP-Behälter bzw. -flaschen handeln. Die Behälter können in einem Gebinde angeordnet sein.

Die Gefäßverschlüsse (Deckel) können dazu vorgesehen sein, Behälter zu verschließen. Bei den Gefäßverschlüssen kann es sich um Kronkorken, Schraubverschlüsse, Dosendeckel und/oder Korken handeln.

Der Bandförderer kann wenigstens zwei Umlenkrollen umfassen, auf denen das Förderband umläuft. Das Förderband kann ein Unter- und ein Obertrum umfassen, die im Wesentlichen horizontal verlaufen. Wenigstens eine der Umlenkrollen kann mittels eines Antriebs antreibbar sein, wobei der Antrieb optional als Elektromotor ausgebildet ist. Der Bandförderer kann weiterhin Führungsrollen zur Führung des Förderbands umfassen. Die Verpackungsgegenstände können beim Transport auf einer Oberseite bzw. einem Obertrum des Förderbands angeordnet sein. Die Behälter können optional mit dem Behälterboden direkt auf dem Förderband angeordnet sein. Das Förderband kann als Endlosband aus flexiblem Material oder als Gliederkette ausgebildet sein. Das flexible Material kann Kunststoff, insbesondere Gummi, sein. Die Gliederkette kann plattenförmige Glieder aufweisen, die jeweils miteinander über ein scharnierartiges Gelenk verbunden sind.

Die Kamera kann eine CCD- oder CMOS-Kamera sein. Die Kamera kann einen Zeilen- oder Flächensensor als Bildaufnahmeelement umfassen. Die Kamera kann ein Objektiv umfassen. Die Kamera kann über einen Datenbus mit einer Bildverarbeitungseinheit verbunden sein. Alternativ kann die Bildverarbeitungseinheit direkt in der Kamera angeordnet sein, wobei die Bildverarbeitungseinheit über einen Datenbus mit einer Steuerungseinheit verbunden ist. Die Kamera kann mit der Blickrichtung auf den Hintergrundabschnitt des Bandförderers ausgerichtet sein. Die Blickrichtung der Kamera kann senkrecht auf das Förderband ausgerichtet sein. "Blickrichtung" kann bedeuten, dass dies die Richtung entlang der optischen Achse der Kamera ist, welche von der Kamera weg zeigt. "Optische Achse" kann hier bedeuten, dass dies eine Achse ist, die senkrecht durch die Mitte eines Bildsensors der Kamera und/oder durch die Mitte des Objektivs in Längsrichtung verläuft. Das Blickfeld der Kamera ist der Raumwinkel, der mittels des Objektivs und dem Bildaufnahmeelement erfasst wird. Das Blickfeld kann die Verpackungsgegenstände, Gefäßverschlüsse, Gebinde, Behältermündungen, Behälterböden und/oder Behälterseitenwände erfassen.

Der Hintergrundabschnitt kann den Teil des Förderbands umfassen, der vom Blickfeld der Kamera erfasst wird. "zur Intensitätsveränderung des Hintergrundabschnitts" kann bedeuten, dass die Leuchtdichte des Hintergrundabschnitts veränderbar ist. Ebenso kann das bedeuten, dass der Hintergrundabschnitt in seiner Reflektivität oder Transparenz veränderbar ist. "zur Farbveränderung des Hintergrundabschnitts " kann bedeuten, dass die vom Hintergrundabschnitt in Richtung der Kamera abgestrahlte/reflektierte Lichtfarbe veränderbar ist. Farbe kann hier bedeuten, dass dies das abgestrahlte/reflektierte Lichtspektrum ist.

"Fotochrom" kann hier bedeuten, dass der Farbstoff durch die Einwirkung von Licht seine Farbe, seine Reflektions- und/oder Transmissionseigenschaften ändert. Das Licht kann UV-Licht (290-400 nm), optional UV-A-Licht (315-380 nm) sein. "Piezochrom" kann hier bedeuten, dass der Farbstoff durch einen mechanischen Druck einen Farb- oder Intensitätswechsel zeigt. "Elektrochrom" kann hier bedeuten, dass der Farbstoff durch die Anlegung eines elektrischen Feldes oder eines elektrischen Stroms einen Farb- und/oder Intensitätswechsel zeigt. "Thermochrom" kann hier bedeuten, dass der Farbstoff durch einen Temperaturwechsel einen Farb- und/oder Intensitätswechsel zeigt.

"Retro-reflektierende Reflektionskörper" kann hier bedeuten, dass die Reflektionskörper dazu ausgebildet sind, Licht unabhängig von der Einfallsrichtung in Richtung der Lichtquelle zurückzureflektieren. Die retro-reflektierenden Reflektionskörper können dazu ausgebildet sein, das reflektierte Licht in Richtung der Lichtquelle zu bündeln und/oder zu verstärken. Die Reflektionskörper können als Mikrokörper ausgebildet sein und im Durchmesser kleiner als 1 mm, bevorzugt kleiner als 0,1 mm sein. Das Förderband kann auf der Oberfläche wenigstens teilweise mit einer Klebefolie beklebt sein, die zum Förderband hin eine Klebeschicht aufweist und auf der zur Kamera hin orientierten Seite die retro-reflektierenden Reflektionskörper. Ebenso können die Reflexionskörper als Farbschicht des Förderbands ausgebildet sein.

Der photochrome Farbstoff kann ein lumineszierenden Farbstoff sein, der optional phosphoreszierend oder fluoreszierend ist. "Lumineszierend" kann hier bedeuten, dass der Farbstoff durch einen äußeren Energieeintrag dazu angeregt wird, Licht zu emittieren. Dadurch kann ein besonders kontrastreicher Bildhintergrund für die Kamera bereitgestellt werden. "Phosphoreszierend oder fluoreszierend" kann hier bedeuten, dass der äußere Energieeintrag Licht bzw. eine elektromagnetische Welle ist. Das vom phosphoreszierenden oder fluoreszierenden Farbstoff emittierte Lichtspektrum kann andere Wellenlängen aufweisen als das anregende Lichtspektrum. "Phosphoreszierend" kann hier bedeuten, dass zeitlich nach Beendigung des äußeren Energieeintrags der Farbstoff nachleuchtet.

Die Vorrichtung kann zur Aktivierung des Farbstoffs eine Lichtquelle, ein Piezoelement, Elektroden oder ein Heizelement umfassen. Das Piezoelement kann dazu ausgebildet sein, Druck auf den Farbstoff auszuüben. Die Elektroden können mit wenigstens einer elektrisch leitenden Schicht des Förderbands verbunden sein, die den Farbstoff enthält oder die mit dem Farbstoff beschichtet ist. Das Heizelement kann dazu ausgebildet sein, den Farbstoff zu erhitzen. Die Lichtquelle kann eine oder mehrere LEDs, eine oder mehrere Leuchtstoffröhren und/oder eine oder mehrere Glühbirnen sein. Die Lichtquelle kann an der Kamera angeordnet sein und optional als Ringlicht um das Objektiv der Kamera ausgebildet sein. Dadurch wird bei retro-reflektierenden Reflektionskörpern am Förderband das Licht von der Lichtquelle besonders effizient in Richtung der Kamera zurückreflektiert.

Die retro-reflektierenden Reflektionskörper können Mikroprismen, Mikrospiegel und/oder Mikrokugeln sein. Dadurch lassen sich die Reflektionskörper in einer besonders dünnen Schicht am Förderband anbringen und werden mechanisch besonders wenig belastet. Die Mikroprismen bzw. -kugeln können aus einem transparenten Kunststoff oder Glas sein.

Der Bandförderer kann eine Auflichtbeleuchtungseinheit mit einer Lichtquelle, einem Streuelement, einem Spiegel und/oder einer Linse umfassen, die optional zur direkten Beleuchtung des Hintergrundabschnitts ausgebildet ist. "Auflichtbeleuchtungseinheit" kann hier bedeuten, dass das Licht von der Beleuchtungseinheit auf die Fläche abgestrahlt wird, auf der die Verpackungsgegenstände befördert werden. Durch die Auflichtbeleuchtungseinheit ist die Beleuchtung des Hintergrundabschnitts besonders einfach aufgebaut. Die Auflichtbeleuchtungseinheit kann mit einer telezentrischen Optik ausgebildet sein. Telezentrisch kann hier bedeuten, dass die Achsen der von einer Lichtaustrittsfläche der Auflichtbeleuchtungseinheit abgestrahlten Strahlenbündel im Wesentlichen parallel verlaufen.

Das Förderband kann einen phosphoriszierenden Farbstoff aufweisen und die Auflichtbeleuchtungseinheit kann an einer Aktivierungsstelle zum Aktivieren des Farbstoffs unmittelbar am Förderband angeordnet sein, wobei die Aktivierungsstelle außerhalb des Hintergrundabschnitts liegt. Anders ausgedrückt kann das Förderband durch die Auflichtbeleuchtungseinheit im Bereich des rücklaufenden Trums zum Leuchten angeregt werden und leuchtet dann solange nach, bis dieser Bereich durch die weitere Förderung den Hintergrundabschnitt durchfahren hat. Dadurch kann die Lichtquelle zur Aktivierung des Farbstoffs im Förderband besonders einfach aufgebaut werden.

Die Vorrichtung kann zur Aktivierung des Farbstoffs eine Hintergrundbeleuchtung umfassen, die zur Beleuchtung des Hintergrundabschnitts ausgebildet ist. Dadurch kann der Farbstoff im Förderband besonders gleichmäßig hinterleuchtet werden und die Kamerabilder können durch die Bildverarbeitung besonders sicher ausgewertet werden. Das Förderband kann zwischen der Kamera und der Hintergrundbeleuchtung angeordnet sein und optional wenigstens in Teilbereichen lichtdurchlässig sein. Dadurch ergibt sich ein besonders einfacher Aufbau. "Lichtdurchlässig" kann hier bedeuten, dass das Förderband wenigstens teilweise transparent ist. Das Förderband kann eine wenigstens teilweise diffus streuende Schicht und/oder Oberfläche aufweisen. Das Material des Förderbands kann Streupartikel aufweisen, die das Licht diffus streuen. Die Hintergrundbeleuchtung kann ein Teil des Hintergrundabschnitts sein.

Die Hintergrundbeleuchtung kann eine Streuscheibe mit einer Lichtaustrittsfläche umfassen und eine Lichtquelle kann auf der zur Lichtaustrittsfläche gegenüberliegenden Fläche der Streuscheibe angeordnet sein. Dadurch ergibt sich eine Hintergrundbeleuchtung mit einer besonders homogenen Abstrahlcharakteristik. Die Hintergrundbeleuchtung kann ein quaderförmiges Gehäuse umfassen, wobei optional eine der beiden größten Quaderflächen die Lichtaustrittsfläche ist. Die Innenseite des Gehäuses kann im Wesentlichen diffus reflektierend ausgebildet sein. In dem Gehäuse kann ein Reflektor mit einer wenigstens teilweise diffus reflektierenden Reflektionsfläche angeordnet sein. Die Streuscheibe kann eine strukturierte Oberfläche aufweisen und/oder aus einem Material mit Streupartikeln sein.

Die Hintergrundbeleuchtung kann einen plattenförmigen Lichtleiter und eine Lichtquelle umfassen, wobei das Licht der Lichtquelle über eine Randfläche des Lichtleiters eingekoppelt wird. Dadurch kann die Hintergrundbeleuchtung besonders kompakt aufgebaut werden. Der Lichtleiter kann zur Lichtauskopplung aus einem volumenstreuenden Material sein und/oder Streustrukturen aufweisen. Auf der zu einer Lichtaustrittsfläche gegenüberliegenden Seite des Lichtleiters kann ein Reflektor angeordnet sein. Der Reflektor kann als Spiegel oder als diffus weißes Material ausgebildet sein.

Zwischen der Hintergrundbeleuchtung und dem Förderband kann ein Maskensystem angeordnet sein. Dadurch können Teilbereiche des Förderbands gezielt aktiviert werden. Denkbar ist, dass das Förderband nur in Bereichen zwischen und/oder um die Verpackungsgegenstände aktiviert wird und dort Licht abstrahlt. Dadurch wird vermieden, dass die Inspektion durch Licht gestört wird, dass durch Verpackungsgegenstände wie transparente Behälter hindurch verläuft. Das Maskensystem kann wenigstens zwei unterschiedliche Masken umfassen. Die Masken können wenigstens teilweise als Farbfilter oder Grauwertfilter ausgebildet sein. Dabei kann eine erste Maske einen ersten Transmissionsgrad von 70% - 100%, optional in einem Bereich von 90% - 100%, und eine zweite Maske einen zweiten Transmissionsgrad von 0 - 30% , optional von 0 - 10 % haben. Wenigstens eine Maske kann Teilbereiche mit unterschiedlichen Farben und/oder Transmissionsgraden haben.

Das Maskensystem kann einen Film mit Masken umfassen, der mittels einer Antriebsrolle verschiebbar ist. Der Film kann entweder umlaufend über die Antriebsrolle und eine Umlenkrolle aufgespannt sein oder von einer ersten auf eine zweite Antriebsrolle umspulbar sein bzw. umgekehrt. Die Antriebsrolle und die Umlenkrolle können auf gegenüberliegenden Seiten der Hintergrundbeleuchtung angeordnet sein.

Das Maskensystem kann plattenartige Masken umfassen, die mittels eines Antriebs gegeneinander verschiebbar sind. Dadurch können die Masken besonders präzise ausgebildet sein. "Gegeneinander verschiebbar" kann hier bedeuten, dass die Masken längs und/oder quer zu ihrer plattenartigen Ausbildung verfahrbar sind. Die Antriebe können Elektromotore sein. Das Maskensystem kann ein Gehäuse umfassen, in dem die plattenartigen Masken angeordnet sind.

Die Kamera kann ein objektseitig telezentrisches Objektiv umfassen, wobei optional eine optische Achse des Objektivs parallel zu Behälterlängsachsen verläuft. Telezentrisch kann hier bedeuten, dass die Pupille des Objektivs im Unendlichen liegt. Ebenso kann hier telezentrisch bedeuten, dass die Strahlbündel ausgehend von jedem Objektpunkt zum Objektiv im Wesentlichen parallel verlaufen. Dadurch ergibt sich für alle Behälter im Kamerabild eine Perspektive, die parallel zu der jeweiligen Behälterachse verläuft. Dadurch werden die Umrisse des Behälterbodens nicht durch den Behälter selbst verschattet.

Weitere Merkmale und Vorteile der Erfindung werden nachfolgend anhand der in den Figuren dargestellten Ausführungsbeispiele erläutert. Dabei zeigt:
- Fig. 1: eine Darstellung eines ersten Ausführungsbeispiels einer Vorrichtung zur Inspektion von Verpackungsgegenständen in einer Seitenansicht;
- Fig. 2: eine Darstellung eines zweiten Ausführungsbeispiels einer Vorrichtung zur Inspektion von Verpackungsgegenständen in einer Seitenansicht;
- Fig. 3: eine beispielhafte Darstellung eines Kamerabildes, das bei der Inspektion mit einer Vorrichtung nach dem zweiten Ausführungsbeispiel nach der Fig. 2 aufgenommen wird;
- Fig. 4: eine Darstellung einer dritten Ausführungsbeispiels einer Vorrichtung zur Inspektion von Verpackungsgegenständen in einer Seitenansicht;
- Fig. 5: die Hintergrundbeleuchtung aus Fig. 4 in einer seitlichen Detailansicht;
- Fig. 6: eine alternative Ausführungsform der Hintergrundbeleuchtung zur Fig. 5 in einer Seitenansicht;
- Fig. 7: eine Darstellung eines vierten Ausführungsbeispiels einer Vorrichtung zur Inspektion von Verpackungsgegenständen in einer Seitenansicht;
- Fig. 8: eine Darstellung eines fünften Ausführungsbeispiels einer Vorrichtung zur Inspektion von Verpackungsgegenständen in einer Seitenansicht;
- Fig. 9: eine Darstellung eines sechsten Ausführungsbeispiels einer Vorrichtung zur Inspektion von Verpackungsgegenständen in einer Seitenansicht; und
- Fig. 10: eine Darstellung eines siebten Ausführungsbeispiels einer Vorrichtung zur Inspektion von Verpackungsgegenständen in einer Seitenansicht.

Bei den Vorrichtungen 1 gemäß den nachfolgenden Ausführungsbeispielen sind als Verpackungsgegenstände befüllte Behälter 2 dargestellt, die mittels des Bandes 3a im Gebinde 3 zusammengefasst sind. Derartige Vorrichtungen 1 können allerdings auch ohne Weiteres zur optischen Inspektion von beliebigen Verpackungsgegenständen eingesetzt werden, wie einzeln oder gruppenartig angeordnete Behälter, Gebinde wie Getränkekästen, leere Behälter und/oder Gefäßverschlüsse.

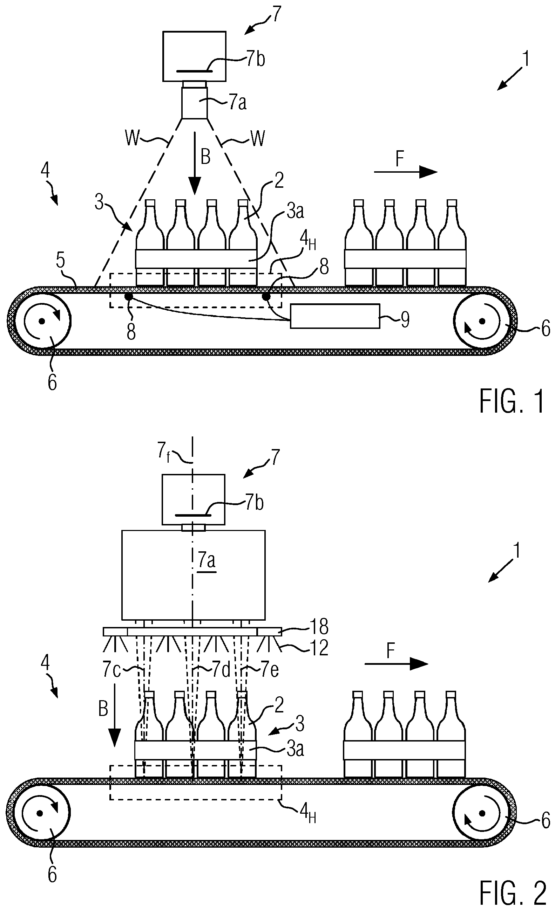

In Fig. 1 ist ein erstes Ausführungsbeispiel einer Vorrichtung 1 zur optischen Inspektion von Verpackungsgegenständen in einer Seitenansicht dargestellt. Zu sehen ist, dass die vom Gebinde 3 zusammengefassten Behälter 2 mittels des Bandförderers 4 in Förderrichtung F transportiert werden. Dabei werden die Behälter 2 mit der elektronischen Kamera 7 inspiziert, wobei die Blickrichtung B der Kamera 7 auf die Behälterverschlüsse ausgerichtet ist.

Bei der Inspektion erfasst die Kamera 7 das Blickfeld W und bildet die Behälter 2 vor dem Hintergrundabschnitt 4_{H} mittels des Objektivs 7a auf den Bildsensor 7b ab. Der Bildsensor 7b ist hier als CMOS-Flächensensor ausgebildet. Alternativ ist hier auch ein Zeilensensor denkbar. Der Zeilensensor wäre dann quer zur Förderrichtung F angeordnet und über die Fortbewegung der Behälter 2 entlang der Förderrichtung F kann ein zweidimensionales Bild generiert werden. Als Ergebnis der Aufnahme durch die Kamera 7 entsteht ein Bild, bei der die Behälter 2 in Längsrichtung vor dem Hintergrundabschnitt 4_{H} zu sehen sind. Dieses Bild wird anschließend in einer hier nicht dargestellten Bildverarbeitungseinheit gefiltert und/oder segmentiert, um daraus die Positionen der Behälter 2 im Gebinde 3 zu erkennen.

Um im Kamerabild einen möglichst hohen Kontrast zu erzielen, ist der Hintergrundabschnitt 4_{H} in seiner Intensität veränderbar ausgebildet. Beim ersten Ausführungsbeispiel ist dazu auf einer weißen Lage des Förderbands 5 eine weitere Schicht mit einem elektrochromen Farbstoff aufgebracht, beispielsweise Wolframoxid. Durch das Anlegen einer Spannung an die Elektroden 8 mittels der Steuereinheit 9 ist die Schicht mit dem elektrochromen Farbstoff zwischen einem transparenten und einem absorbierenden Zustand schaltbar. Alternativ ist auch denkbar, dass der Farbstoff farbveränderbar ist.

Die Vorrichtung gemäß dem ersten Ausführungsbeispiel wird wie folgt eingesetzt: Ist in den transparenten Behältern 2 ein Getränk mit einer dunklen Farbe abgefüllt, so wird der elektrochrome Farbstoff transmittierend eingestellt. Dadurch wird von der Kamera 7 die weiße Farbschicht im Förderband 5 als Bildhintergrund erfasst und es ergibt sich im Kamerabild ein hoher Kontrast gegenüber den dunklen Behältern 2. Demnach können die nachfolgenden Bildverarbeitungsalgorithmen die Behälterpositionen im Gebinde 3 besonders zuverlässig ermitteln.

Wird demgegenüber in den Behältern 2 ein Getränk wie Wasser transportiert, so wird die elektrochrome Schicht im Förderband 5 durch Anlegen einer Spannung mittels der Elektroden 8 absorbierend eingestellt. Dadurch erscheint der Hintergrundabschnitt 4_{H} im Kamerabild als dunkler Bildhintergrund und die hellen Behälter 2 können besonders gut gegenüber dem Bildhintergrund erkannt werden.

In der Fig. 2 ist ein zweites Ausführungsbeispiel einer Vorrichtung 1 zur optischen Inspektion von Verpackungsgegenständen in einer Seitenansicht gezeigt. Das zweite Ausführungsbeispiel unterscheidet sich von dem in der Fig. 1 gezeigten ersten Ausführungsbeispiel dadurch, dass dem Basismaterial des Förderbands 5 ein fluoreszierender Farbstoff beigemischt ist, der durch die telezentrische Auflichtbeleuchtungseinheit 18 aktiviert wird. Darüber hinaus ist zu sehen, dass die Kamera 7 ein objektseitig telezentrisches Objektiv 7a umfasst.

Die Auflichtbeleuchtungseinheit 18 ist hier als Ringlicht um das Objektiv 7a ausgebildet. An einem Ringförmigen Träger sind hier eine Vielzahl von UV-LEDs angeordnet (hier nicht dargestellt), die UV-A-Licht 12 im Wesentlichen telezentrisch parallel zur Blickrichtung B der Kamera 7 abstrahlen. Dies ist daran zu erkennen, dass die einzelnen Strahlenbündel des Lichts 12 mit ihren Achsen parallel ausgerichtet sind. Dadurch wird der Hintergrundabschnitt 4_{H} mit einer geringen Verschattung durch die Behälter 2 beleuchtet.

Durch das UV-A-Licht wird der fluoreszierende Farbstoff im Förderband 5 zum Leuchten im Bereich des sichtbaren Spektrums angeregt. Folglich werden die Behälter 2 vom Hintergrundabschnitt 4_{H} ausgehend mit sichtbarem Licht in Richtung zur Kamera 7 hinterleuchtet.

Gemäß eines nicht unter die Erfindung fallenden Ausführungsbeispiels ist denkbar, dass die Auflichtbeleuchtungseinheit 18 Licht 12 im sichtbaren Bereich des elektromagnetischen Spektrums abstrahlt und das Förderband 5 anstatt des fluoreszierenden Farbstoffs im Basismaterial mit retro-reflektierende Reflektionskörpern an der Bandoberfläche versehen ist (beispielsweise Mikrokugeln aus Glas). Diese bündeln das auftreffende Licht vorwiegend in Richtung der Lichtquelle zurück, also zur Auflichtbeleuchtungseinheit 18. Da diese als Ringlicht um das Objektiv 7a ausgebildet ist, wird das Licht so besonders stark in Richtung der Kamera 7 gebündelt. Dadurch kann ein besonders hoher Kontrast erzielt werden.

Das objektseitig telezentrische Objektiv 7a ist mit einer fresnelisierten Frontlinse ausgebildet. Dadurch kann das Objektiv 7a besonders kompakt und kostensparend aufgebaut werden. Die Frontlinse hat beispielsweise einen Durchmesser, der das Gebinde umfasst (z.B. 1m).

Bei dem objektseitig telezentrische Objektiv 7a sind die abbildenden Strahlbündel 7c - 7e in Richtung der Behälter 2 im Wesentlichen parallel zur optischen Achse 7f ausgerichtet. Durch die Telezentrie ändert sich der Abbildungsmaßstab in der Tiefe des Bildfeldes nicht (also entlang der Blickrichtung B).

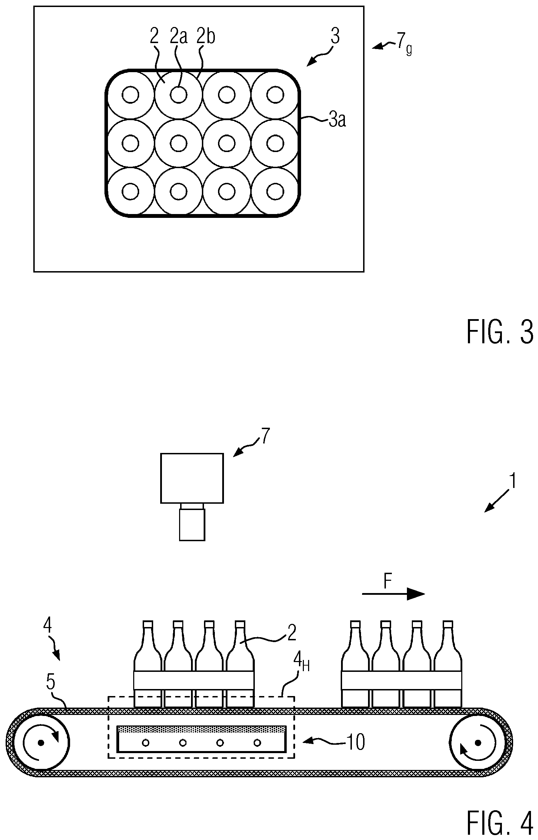

Als Ergebnis der telezentrischen Abbildung des Gebindes 3 auf dem Bildsensor 7b (Fig. 2) ist beispielhaft das Kamerabild 7g in der Fig. 3 dargestellt. Zu sehen ist, dass im Kamerabild 7g die Behältermündungen 2a aller Behälter 2 konzentrisch zu den Behälterrümpfen bzw. -böden 2b abgebildet werden. Dadurch sind aus der Kameraperspektive die Umrisse aller Behälterrümpfe bzw. -böden 2b sichtbar und werden nicht durch eine schräge Behälteransicht verdeckt. Auch das Band 3a führt nicht zu einer Verdeckung von Behälterteilen.

In der Fig. 4 ist ein drittes Ausführungsbeispiel einer Vorrichtung 1 zur optischen Inspektion von Verpackungsgegenständen in einer Seitenansicht gezeigt. Das dritte Ausführungsbeispiel unterscheidet sich von dem in Fig. 1 gezeigten ersten Ausführungsbeispiel dadurch, dass dem Basismaterial des Förderbands 5 ein fluoreszierender Farbstoff beigemischt ist, der durch die Hintergrundbeleuchtung 10 aktiviert wird.

Dazu hinterleuchtet die Hintergrundbeleuchtung 10 einen flächigen Bereich des Hintergrundabschnitts 4_{H} im Bereich des Bodens der Behälter 2. Zur Aktivierung weist die Hintergrundbeleuchtung 10 sogenannte Schwarzlichtröhren auf, die UV-A-Licht (315-380 nm) abstrahlen. Dadurch wird der fluoreszierende Farbstoff im Förderband 5 zum Leuchten im sichtbaren Bereich angeregt und hinterleuchtet so besonders homogen die Behälter 2. Das UV-A-Licht wird dabei durch die Kamera 7 nicht direkt erfasst. Wird dagegen die Hintergrundbeleuchtung 10 ausgeschaltet, so leuchtet der Farbstoff nicht mehr und das Förderband 5 erscheint im Kamerabild der Kamera 7 wesentlich dunkler.

Durch den Einsatz des fluoreszierenden Farbstoffs leuchtet das Förderband 5 bei einer eingeschalteten Hintergrundbeleuchtung besonders hell und somit können Behälter 2 mit einem dunklen Getränk besonders gut im Kamerabild erfasst werden. Umgekehrt können helle oder durchsichtige Getränke im Behälter 2 bei einer ausgeschalteten Hintergrundbeleuchtung 10 besonders gut erkannt werden, da diese im Kamerabild wesentlich heller als der Hintergrundabschnitt 4_{H} erscheinen.

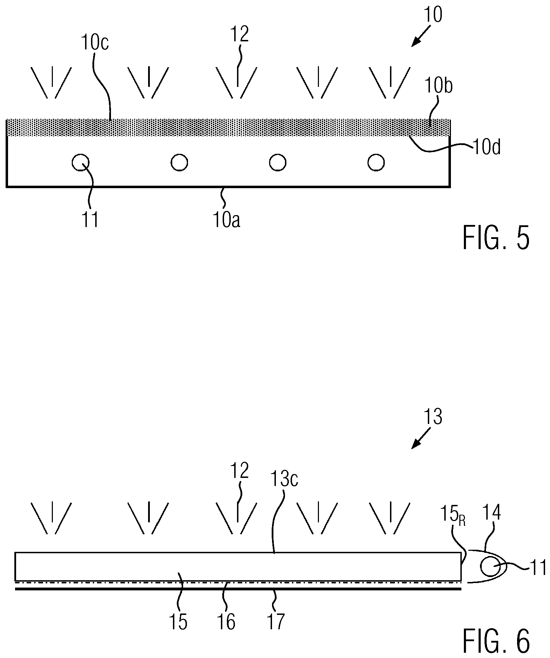

In der Fig. 5 ist die in der Fig. 4 gezeigte Hintergrundbeleuchtung 10 in einer Detailansicht gezeigt. Zu sehen ist, dass die Lichtquellen 11 (UV-A-Leuchtstoffröhren) in dem Gehäuse 10a angeordnet sind, das an seiner Innenseite eine hier nicht dargestellte Reflektionsbeschichtung aufweist. Das Licht wird durch die Streuscheibe 10b homogenisiert und als Licht 12 von der Hintergrundbeleuchtung 10 abgestrahlt.

Wie aus der Fig. 5 in Verbindung mit der Fig. 4 zu sehen ist, befindet sich die Lichtaustrittsfläche 10c unmittelbar unterhalb des Förderbands 5. Weiterhin sind die Lichtquellen 11 auf der zur Lichtaustrittsfläche 10c gegenüberliegenden Fläche 10d der Streuscheibe 10b angeordnet. Dadurch ist es möglich, über einen besonders einfachen Aufbau der Hintergrundbeleuchtung 10 mittels Leuchtstoffröhren 11 eine homogene Lichtverteilung zu erhalten, um die Behälter 2 möglichst gleichmäßig zu hinterleuchten.

In der Fig. 6 ist eine alternative Ausführung der Hintergrundbeleuchtung 13 zu der in der Fig. 5 dargestellten Hintergrundbeleuchtung 10 in einer Seitenansicht gezeigt. Zu sehen ist ein plattenförmiger Lichtleiter 15, bei dem über eine schmale Randfläche 15_{R} Licht mittels der Lichtquelle 11 und dem Reflektor 14 eingekoppelt wird. Der Reflektor 14 ist hier rinnenförmig entlang der Leuchtstoffröhre 11 ausgebildet. Dadurch wird möglichst viel Licht in den Lichtleiter 15 eingekoppelt. Denkbar ist hier auch der Einsatz von Leuchtdioden als Lichtquelle.

Innerhalb des Lichtleiters 15 wird der Lichtstrahl solange hin und her reflektiert, bis er auf eine Streustruktur 16 trifft. Diese ist beispielsweise als Siebdruck rasterförmig auf die Rückseite des Lichtleiters 15 aufgedruckt. Dadurch wird ein Teil des Lichts in Richtung der Lichtaustrittsfläche 13c reflektiert und dort aus dem Lichtleiter 15 als abgestrahltes Licht 12 ausgekoppelt. Das auf der Rückseite der Streustruktur 16 emittierte Licht wird durch den Spiegelreflektor 17 in den Lichtleiter 15 zurück reflektiert und so recycelt.

Die in der Fig. 6 gezeigte Ausführungsform der Hintergrundbeleuchtung 13 ist gegenüber der in Fig. 5 gezeigten besonders kompakt ausgebildet.

Denkbar ist auch, dass die Hintergrundbeleuchtung 10 oder 13 aus Fig. 5 bzw. 6 für das nachfolgende vierte und fünfte Ausführungsbeispiel als Hintergrundbeleuchtung eingesetzt wird.

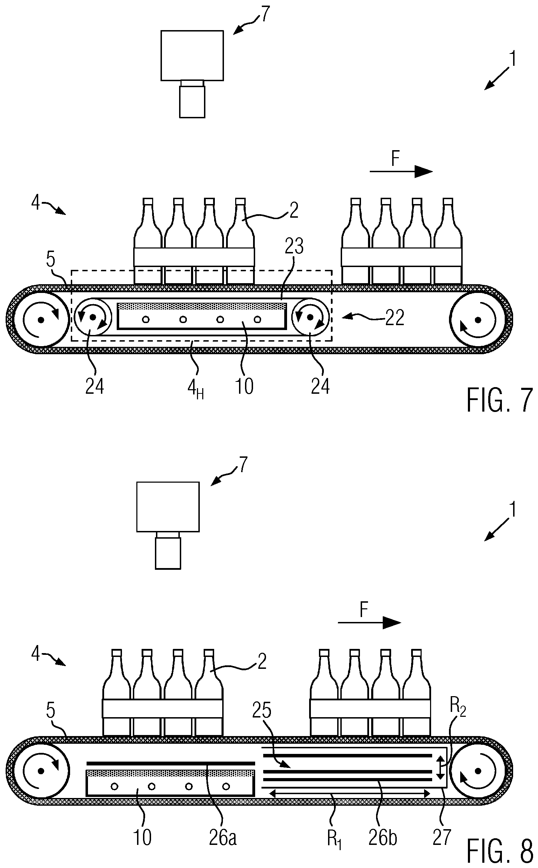

In der Fig. 7 ist ein viertes Ausführungsbeispiel einer Vorrichtung zur optischen Inspektion von Verpackungsgegenständen in einer Seitenansicht dargestellt. Dieses unterscheidet sich von dem dritten Ausführungsbeispiel aus der Fig. 4 dadurch, dass zwischen der Hintergrundbeleuchtung 10 und dem Förderband 5 ein Maskensystem 22 angeordnet ist. Das Maskensystem 22 umfasst hier den Film 23, der mittels der beiden Antriebsrollen 24 verschiebbar ist. Auf dem Film 23 sind zwei Masken aufgebracht, wobei die erste Maske komplett transparent und die zweite Maske an Sollpositionen der Behälter 2 absorbierend und zwischen den Behältern 2 transparent ausgebildet ist. Mittels der Antriebe 24 kann nun der Film 23 so zwischen der Hintergrundbeleuchtung 10 und dem Förderband 5 verschoben werden, dass der Hintergrundabschnitt 4_{H} komplett hinterleuchtet werden kann oder nur zwischen den Behältern 2. Dadurch kann mittels der zweiten Maske das Förderband 2 in dem unmittelbaren Bereich um die Behälterböden zur Abstrahlung von sichtbarem Licht angeregt werden. Durch die absorbierenden Bereiche unter den Behältern 2 wird der Lichtanteil verringert, der die Behälter 2 durchdringt und es wird im Kamerabild ein besonders hoher Kontrast erzielt. Denkbar ist hier auch, dass weitere Masken ähnlich zur zweiten Maske vorhanden sind, bei denen die absorbierenden Bereiche an andere Behältergrößen, Sollpositionen und/oder Gebinde angepasst sind.

Denkbar ist hier auch, dass der Film, ähnlich wie bei einer Filmkamera, auf den Rollen 24 auf- bzw. abgerollt wird. Dadurch können im Maskensystem 22 besonders viele Masken in einem kompakten Bauraum untergebracht werden.

In der Fig. 8 ist ein fünftes Ausführungsbeispiel einer Vorrichtung 1 zur optischen Inspektion von Verpackungsgegenständen in einer Seitenansicht gezeigt. Dieses unterscheidet sich vom vierten Ausführungsbeispiel in der Fig. 7 lediglich dadurch, dass das Maskensystem 25 plattenartige Masken 26a und 26b umfasst, die mittels eines hier nicht dargestellten Antriebs entlang der Richtungen R1 und R2 verschiebbar sind. Dadurch können verschiedene Masken 26a, 26b zwischen die Hintergrundbeleuchtung 10 und das Förderband 5 eingeschoben werden. Durch die plattenartige Ausbildung der Masken 26a, 26b können diese besonders präzise geführt werden. Denkbar ist hier, dass die Masken 26a und 26b unterschiedliche Transmissionswerte aufweisen. Denkbar ist auch, dass wenigstens eine der Masken 26a und 26b örtlich abgegrenzte Bereiche mit unterschiedlichen Grauwerten aufweist. Beispielsweise kann dadurch im Kamerabild die Lage der Behälter 2 gegenüber der Maske 26a erfasst werden.

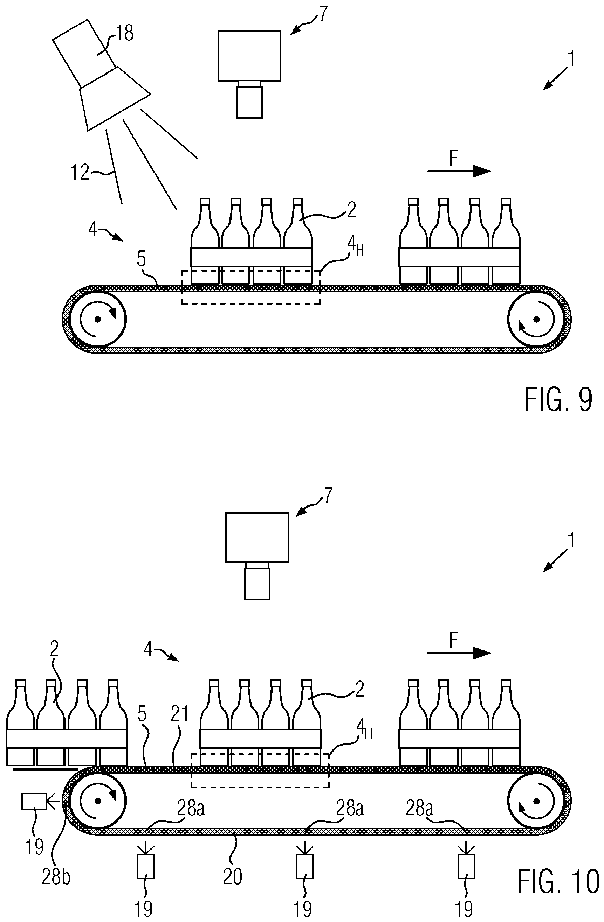

In der Fig. 9 ist ein sechstes Ausführungsbeispiel der Vorrichtung 1 zur optischen Inspektion von Verpackungsgegenständen in einer Seitenansicht gezeigt. Dieses unterscheidet sich von dem dritten Ausführungsbeispiel aus der Fig. 4 lediglich dadurch, dass das Förderband 5 einen phosphoriszierenden Farbstoff aufweist, der mittels der Auflichtbeleuchtungseinheit 18 mit UV-A-Licht beleuchtet wird. Hierdurch werden die einzelnen Partikel des Farbstoffs zum Leuchten angeregt und das Förderband 5 bildet im Bereich des Hintergrundabschnitts 4_{H} einen hellen Bildhintergrund. Falls die Auflichtbeleuchtungseinheit 18 abgeschaltet wird, so erscheint der Hintergrundabschnitt 4_{H} im Kamerabild dunkel.

In der Fig. 10 ist ein siebtes Ausführungsbeispiel der Vorrichtung 1 zur optischen Inspektion von Verpackungsgegenständen in einer Seitenansicht gezeigt. Dieses unterscheidet sich vom sechsten Ausführungsbeispiel aus Fig. 9 lediglich dadurch, dass die Auflichtbeleuchtungseinheiten 19 zum Aktivieren des Farbstoffs unmittelbar am Förderband 5 an den Aktivierungsstellen 28a und 28b angeordnet sind, die außerhalb des Hintergrundabschnitts 4_{H} liegen.

Die Aktivierungsstellen 28a sind am rücklaufenden Trum 20 des Förderbands 5 angeordnet und die Auflichtbeleuchtungseinheiten 19 strahlen hier UV-A-Licht im Wesentlichen vertikal nach oben in Richtung der Oberfläche des Förderbands 5 ab. Eine zusätzliche Aktivierungsstelle 28b mit einer horizontal abstrahlenden Auflichtbeleuchtungseinheit 19 ist im Bereich der Umlenkung des Förderbands 5 zu sehen.

Nach der Aktivierung an den Aktivierungsstellen 28a und 28b bewegt sich das durch die Phosphoreszenz nachleuchtende Förderband weiter in den Bereich des oberen Trums 21 und dient im Bereich des Hintergrundabschnitts 4_{H} als Hinterleuchtung der Behälter 2. In diesem Fall ist das Getränk in den Behältern 2 eine dunkle Flüssigkeit und damit ergibt sich gegenüber dem Hintergrundabschnitt 4_{H} ein hoher Kontrast. Werden dagegen in den Behältern 2 Getränke mit einer hellen oder durchsichtigen Flüssigkeit gefördert, so werden die Auflichtbeleuchtungseinheiten 19 deaktiviert. Folglich leuchtet der phosphoriszierende Farbstoff nicht mehr nach und das Förderband 5 erscheint im Hintergrundabschnitt 4_{H} dunkel. Dadurch ergibt sich auch bei hellen oder durchsichtigen Flüssigkeiten ein hoher Kontrast.

Die Auflichtbeleuchtungseinheiten 18 und 19 in den Fig. 9 und 10 können dabei alternativ zum UV-A-Lichtspektrum jedes andere Lichtspektrum aufweisen, das zur Aktivierung des phosphoreszierenden Farbstoffs geeignet ist.

Es versteht sich, dass in den zuvor beschriebenen Ausführungsbeispielen genannten Merkmale nicht auf diese speziellen Kombinationen beschränkt sind und in beliebigen anderen Kombinationen möglich sind.

## Patentansprüche

1. Vorrichtung (1) zur optischen Inspektion von Verpackungsgegenständen (2) in der Getränketechnologie, mit einem Bandförderer (4) zum Transport der Verpackungsgegenstände (2) auf einem Förderband (5) und mit einer elektronischen Kamera (7), wobei der Bandförderer (4) mit wenigstens einem Teil des Förderbands (5) einen Hintergrundabschnitt (4_{H}) für die Kamera (7) bildet, wobei die Kamera mit der Blickrichtung auf den Hintergrundabschnitt des Bandförderers ausgerichtet ist, und wobei das Blickfeld der Kamera die Verpackungsgegenstände, Gefäßverschlüsse, Gebinde, Behältermündungen, Behälterböden und/oder Behälterseitenwände erfasst,
**dadurch gekennzeichnet, dass**
das Förderband (5) zur Intensitäts- und/oder Farbveränderung des Hintergrundabschnitts (4_{H}) einen photochromen, piezochromen, elektrochromen oder thermochromen Farbstoff aufweist.

2. Vorrichtung (1) nach Anspruch 1, wobei der photochrome Farbstoff ein lumineszierender Farbstoff ist, der optional phosphoreszierend oder fluoreszierend ist.

3. Vorrichtung (1) nach Anspruch 1 oder 2, wobei die Vorrichtung (1) zur Aktivierung des Farbstoffs eine Lichtquelle (11), ein Piezoelement, Elektroden (8) oder ein Heizelement umfasst.

4. Vorrichtung (1) nach einem der Ansprüche 1 - 3, wobei das Förderband zusätzlich retro-reflektierende Reflektionskörper aufweist und wobei die retro-reflektierenden Reflektionskörper als Mikroprismen, Mikrospiegel und/oder Mikrokugeln ausgebildet sind.

5. Vorrichtung (1) nach einem der Ansprüche 1 - 4, wobei der Bandförderer (4) eine Auflichtbeleuchtungseinheit (18, 19) mit einer Lichtquelle, einem Streuelement, einem Spiegel und/oder einer Linse umfasst, die optional zur direkten Beleuchtung des Hintergrundabschnitts (4_{H}) ausgebildet ist.

6. Vorrichtung (1) nach Anspruch 5, wobei das Förderband (5) einen phosphoreszierenden Farbstoff aufweist und die Auflichtbeleuchtungseinheit (19) an einer Aktivierungsstelle (28a, 28b) zum Aktivieren des Farbstoffs unmittelbar am Förderband (5) angeordnet ist und wobei die Aktivierungsstelle (28a, 28b) außerhalb des Hintergrundabschnitts (4_{H}) liegt.

7. Vorrichtung (1) nach einem der Ansprüche 1 - 3, wobei die Vorrichtung zur Aktivierung des Farbstoffs eine Hintergrundbeleuchtung (10, 13) umfasst, die zur Hinterleuchtung des Hintergrundabschnitts (4_{H}) ausgebildet ist.

8. Vorrichtung (1) nach Anspruch 7, wobei das Förderband (5) zwischen der Kamera (7) und der Hintergrundbeleuchtung (10, 13) angeordnet ist und wobei optional das Förderband (5) wenigstens in Teilbereichen lichtdurchlässig ausgebildet ist.

9. Vorrichtung (1) nach Anspruch 7 oder 8, wobei die Hintergrundbeleuchtung (10) eine Streuscheibe (10b) mit einer Lichtaustrittsfläche (10c) umfasst und eine Lichtquelle (11) auf der zur Lichtaustrittsfläche (10c) gegenüberliegenden Fläche (10d) der Streuscheibe (10b) angeordnet ist.

10. Vorrichtung (1) nach Anspruch 7 oder 8, wobei die Hintergrundbeleuchtung (13) einen plattenförmigen Lichtleiter (15) und eine Lichtquelle (11) umfasst und wobei das Licht der Lichtquelle (11) über eine Randfläche (15_{R}) des Lichtleiters (15) eingekoppelt wird.

11. Vorrichtung (1) nach wenigstens einem der Ansprüche 7 - 10, wobei zwischen der Hintergrundbeleuchtung (10, 13) und dem Förderband (5) ein Maskensystem (22, 25) angeordnet ist.

12. Vorrichtung (1) nach Anspruch 11, wobei das Maskensystem (22) einen Film (23) mit Masken umfasst, der mittels einer Antriebsrolle (24) verschiebbar ist.

13. Vorrichtung (1) nach Anspruch 11, wobei das Maskensystem (25) plattenartige Masken (26a, 26b) umfasst, die mittels eines Antriebs gegeneinander verschiebbar sind.

14. Vorrichtung (1) nach wenigstens einem der Ansprüche 1 - 13, wobei die Kamera (7) ein objektseitig telezentrisches Objektiv (7a) umfasst, wobei optional eine optische Achse (7f) des Objektivs (7a) parallel zu Behälterlängsachsen verläuft.

## Claims

1. Device (1) for the optical inspection of packaging objects (2) in beverage technology, comprising a belt conveyor (4) for transporting the packaging objects (2) on a conveyor belt (5) and comprising an electronic camera (7), the belt conveyor (4) forming a background section (4_{H}) for the camera (7) with at least part of the conveyor belt (5), the camera being oriented with the viewing direction onto the background section (4_{H}) of the belt conveyor, and the field of view of the camera detecting the packaging objects, vessel closures, packs, container mouths, container bottoms and/or container side walls,
**characterized in that**
the conveyor belt (5) comprises a photochromic, piezochromic, electrochromic or thermochromic dye for changing the intensity and/or color of the background section (4_{H}).

2. Device (1) according to claim 1, wherein the photochromic dye is a luminescent dye which is optionally phosphorescent or fluorescent.

3. Device (1) according to claim 1 or 2, wherein the device (1) for activating the dye comprises a light source (11), a piezoelectric element, electrodes (8) or a heating element.

4. Device (1) according to one of claims 1 to 3, wherein the conveyor belt additionally comprises retro-reflecting reflection bodies and wherein the retro-reflecting reflection bodies are designed as microprisms, micromirrors and/or microspheres.

5. Device (1) according to one of claims 1 to 4, wherein the belt conveyor (4) comprises an incident light illumination unit (18, 19) with a light source, a scattering element, a mirror and/or a lens optionally designed for direct illumination of the background section (4_{H}).

6. Device (1) according to claim 5, wherein the conveyor belt (5) comprises a phosphorescent dye and the incident light illumination unit (19) is arranged at an activation point (28a, 28b) for activating the dye directly on the conveyor belt (5) and wherein the activation point (28a, 28b) lies outside the background section (4_{H}).

7. Device (1) according to any one of claims 1 to 3, wherein the device for activating the dye comprises a background illumination (10, 13) configured to backlight the background section (4_{H}).

8. Device (1) according to claim 7, wherein the conveyor belt (5) is arranged between the camera (7) and the background illumination (10, 13) and wherein optionally the conveyor belt (5) is made translucent at least in partial regions.

9. Device (1) according to claim 7 or 8, wherein the background illumination (10) comprises a diffuser (10b) with a light exit surface (10c) and a light source (11) is arranged on the surface (10d) of the diffuser (10b) opposite the light exit surface (10c).

10. Device (1) according to claim 7 or 8, wherein the background illumination (13) comprises a plate-shaped light guide (15) and a light source (11) and wherein the light of the light source (11) is coupled in via an edge surface (15_{R}) of the light guide (15).

11. Device (1) according to at least one of claims 7 to 10, wherein a mask system (22, 25) is arranged between the background illumination (10, 13) and the conveyor belt (5).

12. Device (1) according to claim 11, wherein the mask system (22) comprises a film (23) with masks which is displaceable by means of a drive roller (24).

13. Device (1) according to claim 11, wherein the mask system (25) comprises plate-like masks (26a, 26b) which are displaceable relative to one another by means of a drive.

14. Device (1) according to at least one of claims 1 to 13, wherein the camera (7) comprises an object-side telecentric lens (7a), wherein optionally an optical axis (7f) of the lens (7a) extends parallel to container longitudinal axes.

## Revendications

1. Dispositif (1) pour l'inspection optique d'objets d'emballage (2) dans le domaine technologique de l'industrie des boissons, comprenant un transporteur à bande (4) pour le transport des objets d'emballage (2) sur une bande transporteuse (5), et comprenant également une caméra électronique (7), dispositif
dans lequel le transporteur à bande (4) forme, avec au moins une partie de la bande transporteuse (5), un secteur d'arrière-plan (4_{H}) pour la caméra (7),
dans lequel la caméra est orientée avec sa direction de prise de vue vers le secteur d'arrière-plan du transporteur à bande,
et dans lequel le champ de vision de la caméra relève les objets d'emballage, les fermetures de contenants, les packs, les embouchures de contenants, les fonds de contenants et/ou des parois latérales de contenants,
**caractérisé**
**en ce que** la bande transporteuse (5) présente, pour produire une variation d'intensité et/ou de couleur du secteur d'arrière-plan (4_{H}), un colorant photochrome, piézochrome, électro-chrome ou thermo-chrome.

2. Dispositif (1) selon la revendication 1, dans lequel le colorant photochrome est un colorant luminescent, qui, de manière optionnelle, est phosphorescent ou fluorescent.

3. Dispositif (1) selon la revendication 1 ou la revendication 2, dans lequel le dispositif (1) comprend pour activer le colorant, une source de lumière (11), un élément piézoélectrique, des électrodes (8) ou un élément chauffant.

4. Dispositif (1) selon l'une des revendications 1-3, dans lequel la bande transporteuse présente en supplément, des corps de réflexion rétroréfléchissants, et dans lequel les corps de réflexion rétroréfléchissants sont réalisés sous forme de micro-prismes, de micro-miroirs et/ou de microbilles.

5. Dispositif (1) selon l'une des revendications 1-4, dans lequel le transporteur à bande (4) comprend une unité d'éclairage incident direct (18, 19) avec une source de lumière, un élément de dispersion, un miroir et/ou une lentille, qui, de manière optionnelle, est réalisée pour l'éclairage direct du secteur d'arrière-plan (4_{H}) .

6. Dispositif (1) selon la revendication 5, dans lequel la bande transporteuse (5) présente un colorant phosphorescent, et l'unité d'éclairage incident direct (19) est agencée au niveau d'une zone d'activation (28a, 28b) pour activer le colorant directement sur la bande transporteuse (5), et dans lequel la zone d'activation (28a, 28b) se situe en-dehors du secteur d'arrière-plan (4_{H}) .

7. Dispositif (1) selon l'une des revendications 1-3, dans lequel le dispositif comprend pour activer le colorant, un éclairage d'arrière-plan (10, 13), qui est conçu pour rétroéclairer le secteur d'arrière-plan (4_{H}).

8. Dispositif (1) selon la revendication 7, dans lequel la bande transporteuse (5) est agencée entre la caméra (7) et l'éclairage d'arrière-plan (10, 13), et dans lequel, de manière optionnelle, la bande transporteuse (5) est réalisée perméable à la lumière au moins dans des zones partielles.

9. Dispositif (1) selon la revendication 7 ou la revendication 8, dans lequel l'éclairage d'arrière-plan (10) comprend une plaque de dispersion (10b) avec une surface de sortie de lumière (10c), et une source de lumière (11) est agencée sur la surface (10d) de la plaque de dispersion (10b), qui est opposée à la surface de sortie de lumière (10c).

10. Dispositif (1) selon la revendication 7 ou la revendication 8, dans lequel l'éclairage d'arrière-plan (13) comprend un guide d'onde lumineuse (15) sous forme de plaque et une source de lumière (11), et dans lequel la lumière de la source de lumière (11) est envoyée dans le guide d'onde lumineuse par l'intermédiaire d'une surface de bordure (15_{R}) du guide d'onde lumineuse (15).

11. Dispositif (1) selon l'une au moins des revendications 7-10, dans lequel un système de masque (22, 25) est agencé entre l'éclairage d'arrière-plan (10, 13) et la bande transporteuse (5).

12. Dispositif (1) selon la revendication 11, dans lequel le système de masque (22) comprend un film (23) avec des masques, qui peut être déplacé en translation au moyen d'un rouleau d'entrainement (24).

13. Dispositif (1) selon la revendication 11, dans lequel le système de masque (25) comprend des masques en forme de plaque (26a, 26b), qui peuvent être déplacés en translation les uns par rapport aux autres.

14. Dispositif (1) selon l'une au moins des revendications 1-13, dans lequel la caméra (7) comprend un objectif (7a) télécentrique du côté objet, un axe optique (7f) de l'objectif (7a) s'étendant, de manière optionnelle, parallèlement aux axes longitudinaux des contenants.
